# EUROPEAN PATENT SPECIFICATION

(11) **EP 4 472 175 B1**
(45) Date of publication and mention of the grant of the patent: **01.04.2026**
(21) Application number: 22928455.9
(22) Date of filing: 27.12.2022
(51) Int. Cl.: H04L 69/18, H04W 4/80, H04W 8/00, H04W 76/14, H04W 84/18, H04L 67/141, H04W 48/16, H04W 56/00, H04W 48/08

(54) **BLUETOOTH CONNECTION METHOD AND AUDIO DEVICE**
BLUETOOTH-VERBINDUNGSVERFAHREN UND AUDIOVORRICHTUNG
PROCÉDÉ DE CONNEXION BLUETOOTH ET DISPOSITIF AUDIO

(30) Priority: 22.02.2022 CN 202210161997
(43) Date of publication of application: 04.12.2024
(73) Proprietor: GUANGDONG OPPO MOBILE TELECOMMUNICATIONS CORP., LTD., Dongguan, Guangdong 523860 (CN)
(72) Inventor: JIANG, Yonggao, Dongguan, Guangdong 523860 (CN); BAO, Jianquan, Dongguan, Guangdong 523860 (CN)
(74) Representative: Novagraaf Technologies
(86) International application number: PCT/CN2022/142464
(87) International publication number: WO 2023/160215

(56) References cited:
- WO-A1-2017/214137
- CN-A- 106 131 810
- CN-A- 106 559 737
- CN-A- 111 464 993
- CN-A- 112 788 579
- CN-A- 113 296 621
- US-A1- 2021 274 332
- US-A1- 2022 039 179

## Description

### TECHNICAL FIELD

The present disclosure relates, but is not limited, to the field of communication technology, and more particularly, to a Bluetooth connection method and an audio device.

### BACKGROUND

Bluetooth technology, as a short range wireless connection technology, has a wider and wider application, as well as attracts more and more attention from the public. For example, more and more users choose to use a Bluetooth audio device that is portable and able to remove the limitation of a physical cord, which improves the convenience for the users to use the Bluetooth audio device.

However, the determination of a connection method between a terminal device and an audio device during a Bluetooth connection has been an ongoing problem in the field.

The CN patent application No. CN111464993A discloses a pairing method used between binaural Bluetooth earphones and the binaural Bluetooth earphones. The pairing method includes the steps that: in a preset triggering state, a first earphone in the binaural Bluetooth earphones broadcasts a first pairing request on a predefined radio frequency channel, and carries out the scanning on the predefined radio frequency channel; and when the first earphone receives a first pairing response returned by a second earphone in the binaural Bluetooth earphone in response to receiving the first pairing request through scanning, the first earphone and the second earphone perform pairing confirmation. According to the technical scheme, a steady earphone pairing scheme can be provided for an existing TWS Bluetooth technical scheme.

The US patent application No. US2022/039179A1 discloses that an electronic device establishes a first Bluetooth connection to a first wireless earbud, where there is a wireless connection between the first wireless earbud and a second wireless earbud. The electronic device establishes a second Bluetooth connection to the second wireless earbud by using the first wireless earbud. The electronic device simultaneously maintains the first Bluetooth connection and the second Bluetooth connection.

The CN patent application No. CN113296621A discloses a wireless multi-mode mouse and an operating method thereof. The wireless multi-mode mouse including: a wireless module configured to transmit a wireless signal to or from a host or other terminal; a microprocessor which is configured to alternately execute broadcast according to different wireless communication modes to execute connection pairing with a host or other terminals after the wireless multi-mode mouse is powered on, and establishing wireless connection with the host or other terminals in the wireless communication mode when pairing succeeds when connection pairing succeeds. The microprocessor sets an interval time of the broadcast according to an execution time of the connection request.

### SUMMARY OF THE DISCLOSURE

Some embodiments of the present disclosure provide a Bluetooth connection method and an audio device.

In a first aspect, some embodiments of the present disclosure provide a Bluetooth connection method, performed by an audio device, including: in response to the audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner. The first pair manner is a self-defined fast pair manner and the second pair manner is a Google fast pair manner.

In a second aspect, some embodiments of the present disclosure provide an audio device. The audio device includes a broadcast unit. The broadcast unit is configured to broadcast first connection configuration information that corresponds to a first pair manner and second connection configuration information that corresponds to a second pair manner by turns in response to the audio device supporting the first pair manner and the second pair manner.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner. The first pair manner is a self-defined fast pair manner and the second pair manner is a Google fast pair manner.

In the embodiments of the present disclosure, in response to an audio device supporting a first pair manner and a second pair manner, the audio device broadcasts first connection configuration information that corresponds to the first pair manner and second connection configuration information that corresponds to the second pair manner by turns. The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner. In this way, the embodiments of the present disclosure enable or allow the first terminal device that supports the first pair manner and/or the second terminal device that supports the second pair manner to establish the Bluetooth connection with the audio device, which avoids a case where the terminal device that only supports another pair manner is not able to establish the Bluetooth connection with the audio device due to the audio device only broadcasting the first connection configuration information or the second connection configuration information, thereby improving the success rate of the Bluetooth connection between the terminal device and the audio device. In addition, the terminal device is able to directly detect the connection configuration information that the audio device broadcasts, without the need of sending the connection configuration request through the Bluetooth configuration interface of the terminal device to obtain the connection configuration information of the audio device, thereby further improving the efficiency of the Bluetooth connection between the terminal device and the audio device.

It is to be understood that, the general description above and the detailed description below are merely exemplary and illustrative, which may not limit the present disclosure. Other features and aspects of the present disclosure may be clarified in light of the following detailed description of exemplary embodiments with reference to the accompanying drawings.

### BRIEF DESCRIPTION OF THE DRAWINGS

The drawings illustrated herein are provided to further explain the present disclosure and thus form part of the present disclosure. The embodiments of the present disclosure and their description are used to clarify the present disclosure and may not limit the present disclosure in an improper way.
FIG. 1 is a flowchart of a Bluetooth connection method according to some embodiments of the present disclosure.
FIG. 2 is a flowchart of another Bluetooth connection method according to some embodiments of the present disclosure.
FIG. 3 is a flowchart of still another Bluetooth connection method according to some embodiments of the present disclosure.
FIG. 4 is a flowchart of still another Bluetooth connection method according to some embodiments of the present disclosure.
FIG. 5 is a flowchart of a Bluetooth connection method according to some embodiments of the present disclosure.
FIG. 6a is a flowchart of a Bluetooth connection method according to some embodiments of the present disclosure.
FIG. 6b is a flowchart of a Bluetooth connection method according to some embodiments of the present disclosure.
FIG. 7 is a schematic view of an audio device according to some embodiments of the present disclosure.
FIG. 8 is a structural block view of an audio device according to some embodiments of the present disclosure.
FIG. 9 is a structural block view of a chip according to some embodiments of the present disclosure.

### DETAILED DESCRIPTION

The following further illustrates the technical solutions of the present disclosure by means of the embodiments in conjunction with the drawings. The embodiments of the present disclosure provided below may be combined with one another. Some similar or equivalent ideas or processes may not be repeated in certain embodiments.

It is to be noted that, in the embodiments of the present disclosure, terms, such as "first", "second", and etc., are used to distinguish among similar objects, rather than describing a particular sequence or order.

Besides, the technical solutions described in the embodiments of the present disclosure may be combined arbitrarily, as long as they do not conflict with one another. The term "plurality" refers to two or more, unless otherwise specifically defined.

In order to address the problem of low Bluetooth connection efficiency between an audio device and a terminal device in the related art, some embodiments of the present disclosure provide a Bluetooth connection method, an audio device, a computer storage medium, and a chip.

It is to be noted that, unless otherwise specified, the terminal device mentioned anywhere in the embodiments of the present disclosure may refer to a first terminal device, a second terminal device, or a third terminal device.

The audio device provided by some embodiments of the present disclosure may be any device that is able to play audio. The audio device may be referred to as an audio player device. In some embodiments, the audio device may be a wireless earphone and the wireless earphone may further be referred to a wireless Bluetooth earphone. The wireless earphone may include a true wireless earphone or an ordinary Bluetooth earphone. The true wireless earphone is an earphone without a wired connection between a left earpiece and a right earpiece. The ordinary Bluetooth earphone is an earphone with the wired connection between the left earpiece and the right earpiece. The true wireless earphone may further be referred to as a true wireless stereo (TWS) earphone.

The TWS earphone may be paired with a case that is configured to accommodate or receive the TWS earphone. In some embodiments, the case may further be referred to as a charging case. The charging case is configured to charge the TWS earphone. When the TWS earphone is taken out from the case (i.e., an out-of-case state), the TWS earphone is automatically turned on or waked. When the TWS earphone is placed in the case, the TWS earphone is in an in-the-case state. When the TWS earphone is placed in the case and the case is closed, the TWS earphone is in an off state or an idle state.

In some embodiments, the TWS earphone keeps broadcasting connection configuration information outward and/or maintains a Bluetooth connection with the terminal device in the idle state. In some embodiments, the TWS earphone does not broadcast the connection configuration information outward and ends the Bluetooth connection with the terminal device in the idle state.

The terminal device provided by some embodiments of the present disclosure may be any device that is able to support a Bluetooth connection. The terminal device may be configured to control the audio device. In some embodiments, the terminal device may control at least one of the following of the audio device: a sound volume, a playback progress, a playback content, a sound effect, and so on.

In some embodiments, the audio device may be the left earpiece or the right earpiece of the TWS earphone. The left earpiece or the right earpiece may include a Bluetooth module. The terminal device may establish a Bluetooth connection with the Bluetooth module included in the left earpiece or the right earpiece. The Bluetooth module included in the left earpiece or the right earpiece may control at least one of the sound volume, the playback progress, the playback content, the sound effect, and etc., through receiving Bluetooth information sent from the terminal device. In some embodiments, the audio device may be the ordinary Bluetooth device. In a case where the audio device is the ordinary Bluetooth device, the terminal device may connect to a Bluetooth module of the ordinary Bluetooth device. The Bluetooth module of the ordinary Bluetooth device may control at least one of the sound volume, the playback progress, the playback content, the sound effect, and etc., through receiving Bluetooth information sent from the terminal device.

In some embodiments, the audio device or the terminal device may be at least one or a combination of at least two of the following: an Internet of Things (IoT) device, a satellite terminal, a wireless local loop (WLL) station, a personal digital assistant (PDA), any of a handheld device or a computing device that has a wireless communication function, any other processing device connected to a wireless modem, a server, a mobile phone, a pad, a computer that has a wireless transceiving function, a handheld computer, a desktop computer, a PDA, a portable media player, a smart speaker, a navigation device, any wearable device, e.g., a smart watch, a smart glasses, a smart necklace, and etc., a pedometer, a digital TV, a virtual reality (VR) terminal, an augmented reality (AR) terminal, a wireless terminal of an industrial control, a wireless terminal of a self-driving, a wireless terminal of a remote medical surgery, a wireless terminal of a smart grid, a wireless terminal of a transportation safety, a wireless terminal of a smart city, a wireless terminal of a smart home, a car, a car-mounted device, and a car-mounted module of a car networking system, a wireless modem, a handheld device, a customer premise equipment (CPE), a smart home appliance, and so on.

In some embodiments, the terminal device and the audio device may have different device types. For example, the terminal device is a mobile phone and the audio device is a wireless earphone. In some embodiments, the terminal device and the audio device may have the same device type. For example, each of the terminal device and the audio device may be a mobile phone.

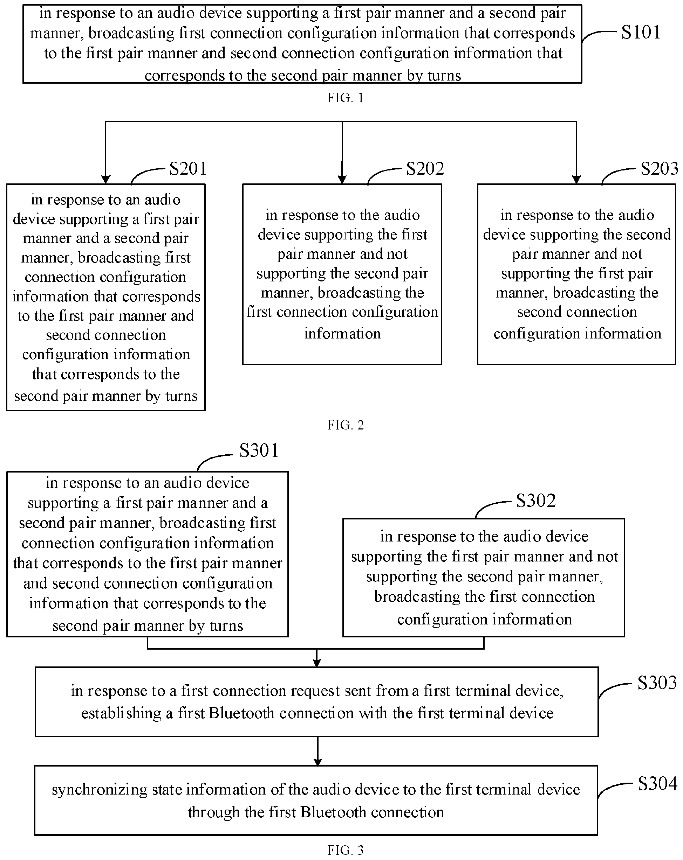

FIG. 1 is a flowchart of a Bluetooth connection method according to some embodiments of the present disclosure. As illustrated in FIG. 1, the method is applied to the audio device and the method includes the following operations.

At operation S101, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

It is to be noted that, each terminal device mentioned in the embodiments of the present disclosure, including each terminal device from the first to the fifth, may support either the first pair manner or the second pair manner, i.e., none of the terminal devices support both the first pair manner and the second pair manner. However, the embodiments of the present disclosure are not limited herein. In a case where a third pair manner exists, the terminal device may be further divided so that, for example, each terminal device may support any one of the first pair manner, the second pair manner, and the third pair manner.

It is to be noted that, each pair manner mentioned in the embodiments of the present disclosure, including the first terminal device, the second terminal device, and the third terminal device, may refer to a fast pair manner. In a case where the terminal device supports the fast pair manner, the audio device broadcasts information and the terminal device establishes the Bluetooth connection with the audio device based on the information that the audio device broadcasts. In this case, the user is not required to open a Bluetooth configuration interface and select the audio device to be connected in the Bluetooth configuration interface in order to connect to the audio device and the terminal device.

In some embodiments, the first pair manner may be a self-defined fast pair manner. The first pair manner may be applied to a terminal device that corresponds to a Mainland Chinese version iOS operating system, also known as a Mainland Chinese version iOS device, or may be applied to a terminal device that corresponds to a Mainland Chinese version non-iOS operating system, also known as a Mainland Chinese version non-iOS device or a Mainland Chinese version Android device, or may be applied to a terminal device that corresponds to a non-Mainland Chinese iOS operating system, also known as a non-Mainland Chinese iOS device. In other words, the first terminal device may be a Mainland Chinese version terminal device or a non-Mainland Chinese version iOS device.

In some embodiments, the second pair manner may be a Google fast pair manner. The second pair manner may be applied to a terminal device that corresponds to a non-Mainland Chinese version non-iOS operating system, also known as a non-Mainland Chinese version non-iOS device. In other words, the second terminal device may be a non-Mainland Chinese version non-iOS device or a non-Mainland Chinese version Android device.

In some embodiments, an audio device supporting a first pair manner and a second pair manner may include: the audio device supports both the self-defined fast pair manner and the Google fast pair manner. In some embodiments, whether the audio device supports the first pair manner and the second pair manner may be pre-configured in factory and may not be altered by the user in use. In some embodiments, the terminal device may determine whether the audio device supports the first pair manner and the second pair manner based on flag information of the audio device. The flag information may be stored in the audio device. The flag information may be pre-configured in factory and may not be altered by the user in use. In some embodiments, the self-defined fast pair manner may be further referred to as a non-Google fast pair manner.

In some embodiments, the first connection configuration information and the second connection configuration information may have different formats. For example, the first connection configuration information and the second connection configuration information may have different frame structures.

In some embodiments, the first connection configuration information and/or the second connection configuration information may include at least one of the following: a flag of the audio device, a Bluetooth name of the audio device, a Bluetooth address information of the audio device, a pair information of the audio device. The Bluetooth address information of the audio device is configured to establish a Bluetooth connection between the audio device and the terminal device that have already paired with the one another. The pair information of the audio device is configured to perform a Bluetooth pairing between the audio device and the terminal device. In response to the Bluetooth pairing being successfully performed, the terminal device establishes the Bluetooth connection with the audio device based on the Bluetooth address information of the audio device.

In some embodiments, in response to the first terminal device detecting the first connection configuration information, in a case where the first terminal device determines that the first terminal device has already been successfully paired with the audio device, the first terminal device establishes the Bluetooth connection with the audio device based on the Bluetooth address information of the audio device included in the first connection configuration information. In response to the first terminal device detecting the first connection configuration information, in a case where the first terminal device determines that the first terminal device has not been paired with the audio device, the first terminal device establishes the Bluetooth connection with the audio device based on the pair information of the audio device included in the first connection configuration information. In response to the Bluetooth pairing being successfully performed between the terminal device and the audio device, the terminal device establishes the Bluetooth connection with the audio device based on the Bluetooth address information of the audio device included in the first connection configuration information.

In some embodiments, in response to the second terminal device detecting the second connection configuration information, in a case where the second terminal device determines that the second terminal device has already been successfully paired with the audio device, the second terminal device establishes the Bluetooth connection with the audio device based on the Bluetooth address information of the audio device included in the second connection configuration information. In response to the second terminal device detecting the second connection configuration information, in a case where the second terminal device determines that the second terminal device has not been paired with the audio device, the second terminal device establishes the Bluetooth connection with the audio device based on the pair information of the audio device included in the second connection configuration information. In response to the Bluetooth pairing being successfully performed between the terminal device and the audio device, the terminal device establishes the Bluetooth connection with the audio device based on the Bluetooth address information of the audio device included in the second connection configuration information.

In some embodiments, broadcasting first connection configuration information that corresponds to the first pair manner and second connection configuration information that corresponds to the second pair manner by turns may refer to: broadcasting the first connection configuration information that corresponds to the first pair manner and the second connection configuration information that corresponds to the second pair manner alternately, or broadcasting the first connection configuration information that corresponds to the first pair manner and the second connection configuration information that corresponds to the second pair manner by means of a time division multiplexing. In some embodiments, the audio device broadcasts the first connection configuration information for M times starting from a first moment, broadcasts the second connection configuration information for N times starting from a second moment, broadcasts the first connection configuration information for M times starting from a third moment, broadcasts the second connection configuration information for N times starting from a fourth moment, and so on. A time difference between any two adjacent moments may be referred to as a first preset period. In some embodiments, M equals to N and each of M and N is an integer that is greater than or equals to 1. For example, each of M and N may be 1, 2, 3, and etc. In some embodiments, M is greater than N and N is an integer that is greater than or equals to 1. In some embodiments, M is less than N and M is an integer that is greater than or equals to 1.

In some application scenarios, during the audio device broadcasts the first connection configuration information and the second connection configuration information by turns, the first terminal device may establish the Bluetooth connection with the audio device based on the first connection configuration information, and/or, the second terminal device may establish the Bluetooth connection with the audio device based on the second connection configuration information.

In some embodiments, during the audio device broadcasts the first connection configuration information and the second connection configuration information by turns, the first terminal device may be able to receive or detect the first connection configuration information but may not be able to receive or detect the second connection configuration information. The first terminal device may establish the Bluetooth connection with the audio device based on the Bluetooth address information included in the first connection configuration information. In some embodiments, during the audio device broadcasts the first connection configuration information and the second connection configuration information by turns, the first terminal device may be able to receive or detect the first connection configuration information and the second connection configuration information. However, the first terminal device may only be able to parse the first connection configuration information but may not be able to parse the second connection configuration information. In this way, the first terminal device may still not be able to obtain contents included in the second connection configuration information. Therefore, the first terminal device may establish the Bluetooth connection with the audio device only based on contents obtained through parsing the first connection configuration information.

In some embodiments, the first terminal device may launch a first application (APP) that is configured to perform the fast pair. The first APP is configured to display the flag of the audio device that includes at least one of the following: account information of the audio device, name information of the audio device, and so on. The user may perform the Bluetooth pairing between the first terminal device and the audio device through selecting the flag of the audio device. In response to the Bluetooth pairing between the first terminal device and the audio device being successfully performed, the first terminal device establishes the Bluetooth connection with the audio device. In some embodiments, in response to the first terminal device detecting the first connection configuration information and determining that the first terminal device has not been paired with the audio device, the first terminal device may send a first reminder to the user. The first reminder is configured to prompt or remind the user to perform the Bluetooth pairing with the audio device through the APP. In response to the first terminal device detecting the first connection configuration information and determining that the first terminal device has been successfully paired with the audio device, the first terminal device may establish the Bluetooth connection with the audio device directly based on the Bluetooth address information included in the first connection configuration information. In this case, the fast pair may be performed through launching the first APP or without launching the first APP.

In some embodiments, during the audio device broadcasts the first connection configuration information and the second connection configuration information by turns, the second terminal device may be able to receive or detect the second connection configuration information but may not be able to receive or detect the first connection configuration information. The second terminal device may establish the Bluetooth connection with the audio device based on the Bluetooth address information included in the second connection configuration information. In some embodiments, during the audio device broadcasts the first connection configuration information and the second connection configuration information by turns, the second terminal device may be able to receive or detect the first connection configuration information and the second connection configuration information. However, the second terminal device may only be able to parse the second connection configuration information but may not be able to parse the first connection configuration information. In this way, the second terminal device may still be not able to obtain contents included in the first connection configuration information. Therefore, the second terminal device may establish the Bluetooth connection with the audio device only based on contents obtained through parsing the second connection configuration information.

In some embodiments, the second terminal device may launch a second APP that is configured to perform the fast pair. The second APP is configured to display the flag of the audio device. The user may perform the Bluetooth pairing between the second terminal device and the audio device through selecting the flag of the audio device. In response to the Bluetooth pairing between the second terminal device and the audio device being successfully performed, the second terminal device establishes the Bluetooth connection with the audio device. In some embodiments, in response to the second terminal device detecting the second connection configuration information and determining that the second terminal device has not been paired with the audio device, the second terminal device may send a second reminder to the user. The second reminder is configured to remind or prompt the user to perform the Bluetooth pairing with the audio device through the APP. In response to the second terminal device detecting the second connection configuration information and determining that the second terminal device has been successfully paired with the audio device, the second terminal device may establish the Bluetooth connection with the audio device directly based on the Bluetooth address information included in the second connection configuration information. In this case, the fast pair may be performed through launching the second APP or without launching the second APP.

In some application scenarios, in response to the terminal device launching the APP, e.g., the first terminal device launching the first APP and the second terminal device launching the second APP, the APP may display the audio device that has not been paired with the terminal device or may display an option prompting whether to perform the pairing between the audio device and the terminal device. In response to the user triggering the audio device that is displayed or the user triggering the option that indicates to perform the pairing between the terminal device and the audio device, the APP performs the Bluetooth pairing between the audio device and the terminal device based on the trigger of the user and establishes the Bluetooth connection between the terminal device and the audio device in response to the Bluetooth pairing between the audio device and the terminal device being successfully performed. In this way, the fast pair may be performed between the terminal device and the audio device through the APP.

In some application scenarios, the user may perform the fast pair between the terminal device and the audio device through a pair manner in the related art, rather than through the APP. In some embodiments, the user may open the Bluetooth configuration interface to scan a Bluetooth device through the Bluetooth configuration interface and select the audio device from a plurality of scanned Bluetooth devices. The terminal device may send a connection configuration request to the audio device based on the trigger of the user to obtain the connection configuration information of the audio device, thereby realizing the Bluetooth connection between the audio device and the terminal device.

In some application scenarios, in response to the terminal device receiving the connection configuration information, including the first connection configuration information or the second connection configuration information, sent from the audio device and the determining that the terminal device has been successfully paired with the audio device, the terminal device establishes the Bluetooth connection with the audio device based on the connection configuration information, i.e., a reconnecting process between devices. In this case, the APP may or may not be launched.

In some application scenarios, the terminal device may display state information of the audio device in the APP. In a case where the APP is turned off, the terminal device may not be able to display the state information of the audio device; however, the terminal device may maintain the Bluetooth connection with the audio device.

In some application scenarios, no matter whether the terminal device launches the APP or not, the terminal device may adjust the sound volume of the audio device based on a trigger performed on a volume adjusting widget on a display or a physical button that is configured to control the sound volume, and/or, the terminal device may control the playback content of the audio device based on an operation performed on the display.

In some application scenarios, the terminal device may customize a control of the audio device through the APP. In some embodiments, the user may enable or perform a noise reduction of the audio device through triggering a noise reduction widget in the APP, and/or, the user may enable the audio device to adopt playback information of a sound effect through triggering the sound effect in the APP.

In some embodiments, in response to the audio device establishing the Bluetooth connection with the first terminal device or the second terminal device, the audio device may perform the following operations: (1) continuing broadcasting the first connection configuration information and the second connection configuration information by turns to enable other terminal devices to establish a Bluetooth connection with the audio device; (2) stopping broadcasting the first connection configuration information and continuing broadcasting the second connection configuration information; (3) continuing broadcasting the first connection configuration information and stopping broadcasting the second connection configuration information; (4) stopping broadcasting the first connection configuration information and the second connection configuration information.

In some embodiments, in response to the audio device establishing the Bluetooth connection with the first terminal device, the audio device may determine whether the first terminal device is an iOS device. In a case where the audio device determines that the first terminal device is an iOS device, the audio device continues broadcasting the first connection configuration information and may either stop or continue broadcasting the second connection configuration information. In a case where the audio device determines that the first terminal device is a non-iOS device, the audio device may either continue or stop broadcasting the first connection configuration information and may either stop or continue broadcasting the second connection configuration information. In a case where the audio device continues broadcasting the first connection configuration information, the audio device may further establish a Bluetooth connection with other terminal devices that support the first pair manner. In a case where the audio device continues broadcasting the second connection configuration information, the audio device may further establish a Bluetooth connection with the second terminal device and/or other terminal devices that support the second connection configuration information.

In some embodiments, in response to the audio device establishing the Bluetooth connection with the second terminal device, the audio device may determine that the second terminal device is a non-iOS device. In this way, the audio device may either continue or stop broadcasting the first connection configuration information and may either stop or continue broadcasting the second connection configuration information. In a case where the audio device continues broadcasting the first connection configuration information, the audio device may further establish a Bluetooth connection with the first terminal device or other terminal devices that support the first pair manner. In a case where the audio device continues broadcasting the second connection configuration information, the audio device may further establish a Bluetooth connection with other terminal devices that support the second connection configuration information.

In some embodiments, the continuing broadcasting the first connection configuration information and/or the second connection configuration information, may include: before the audio device is turned off, continuously broadcasting the first connection configuration information and/or the second connection configuration information.

In some embodiments, the continuing broadcasting the first connection configuration information and/or the second connection configuration information, may include: continuing broadcasting the first connection configuration information for a first period and/or continuing broadcasting the second connection configuration information for a second period. The first period and the second period may or may not have the same length.

In the embodiments of the present disclosure, through broadcasting the first connection configuration information and the second connection configuration information by turns, the audio device may realize the transmission of the first connection configuration information and the second connection configuration information through one single broadcast module, which not only facilitates the miniaturized design of the audio device, but also allows the audio device to support the first pair manner and the second pair manner.

In the embodiments of the present disclosure, in a case where the audio device supports the first pair manner and the second pair manner, the audio device broadcasts the first connection configuration information that corresponds to the first pair manner and the second connection configuration information that corresponds to the second pair manner by turns. The first connection configuration information is configured to establish the Bluetooth connection between the audio device and the first terminal device that supports the first pair manner, and the second connection configuration information is configured to establish the Bluetooth connection between the audio device and the second terminal device that supports the second pair manner. In this way, the embodiments of the present disclosure enable or allow the first terminal device that supports the first pair manner and/or the second terminal device that supports the second pair manner to establish the Bluetooth connection with the audio device, which avoids a case where the terminal device that only supports another pair manner is not able to establish the Bluetooth connection with the audio device due to the audio device only broadcasting the first connection configuration information or the second connection configuration information, thereby improving the success rate of the Bluetooth connection between the terminal device and the audio device. In addition, the terminal device is able to directly detect the connection configuration information that the audio device broadcasts, without the need of sending the connection configuration request through the Bluetooth configuration interface of the terminal device to obtain the connection configuration information of the audio device, thereby further improving the efficiency of Bluetooth connection between the terminal device and the audio device.

FIG. 2 is a flowchart of another Bluetooth connection method according to some embodiments of the present disclosure. As illustrated in FIG. 2, the method is applied to the audio device and includes the following operations.

At operation S201, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

At operation S202, in response to the audio device supporting the first pair manner and not supporting the second pair manner, broadcasting the first connection configuration information.

In some embodiments, the audio device supporting the first pair manner and not supporting the second pair manner, may include: the audio device supporting the self-defined fast pair manner and not supporting the Google fast pair manner. In some embodiments, whether the audio device supports the first pair manner but does not support the second pair manner may be pre-configured in factory and may not be altered by the user in use. In some embodiments, the audio device may determine whether the audio device supports the first pair manner but does not support the second pair manner based on the flag information of the audio device. The flag information may be stored in the audio device.

In some embodiments, the broadcasting the first connection configuration information, may include: broadcasting the first connection configuration information every second preset period. The second preset period may be longer than the first preset period. The second preset period may be equal to the first preset period. The second preset period may be shorter than the first preset period.

At operation S203, in response to the audio device supporting the second pair manner and not supporting the first pair manner, broadcasting the second connection configuration information.

In some embodiments, the audio device supporting the second pair manner and not supporting the first pair manner, may include: the audio device supporting the Google fast pair manner and not supporting the self-defined fast pair manner. In some embodiments, whether the audio device supports the second pair manner but does not support the first pair manner may be pre-configured in factory and may not be altered by the user in use. In some embodiments, the audio device may determine whether the audio device supports the second pair manner but does not support the first pair manner based on the flag information of the audio device. The flag information may be stored in the audio device.

In some embodiments, the broadcasting the second connection configuration information, may include: broadcasting the second connection configuration information every third preset period. The third preset period may be longer than, may be shorter than, or may be equal to the first preset period.

In the embodiments of the present disclosure, in a case where the audio device does not support the second pair manner, the audio device does not broadcast the second connection configuration information. In a case where the audio device does not support the first pair manner, the audio device does not broadcast the first connection configuration information. In this way, the resource utilizing rate may be improved and the power consumption of the audio device may be reduced.

In some embodiments, the audio device may determine the flag information of the audio device and then determine that the audio device supports the first pair manner and the second pair manner based on the flag information. In some embodiments, the audio device may determine the flag information of the audio device and then determine that the audio device supports the first pair manner but does not support the second pair manner based on the flag information. In some embodiments, the audio device may determine the flag information of the audio device and then determine that the audio device supports the second pair manner but does not support the first pair manner based on the flag information.

In some embodiments, the flag information may be version flag information. The version flag information may be configured to indicate whether the audio device is a Mainland Chinese version or a non-Mainland Chinese version. The Mainland Chinese version refers to a version of an internationally released device that is particularly provided to Mainland China. In some embodiments, in a case where the flag information indicates that the audio device is the Mainland Chinese version, the audio device determines that the audio device supports the first pair manner. In some embodiments, in a case where the flag information indicates that the audio device is the non-Mainland Chinese version, the audio device determines that the audio device supports the first pair manner and the second pair manner.

In some embodiments, the flag information may indicate the pair manner that the audio device is able to support. In some embodiments, the flag information may indicate that the audio device supports one pair manner. For example, the flag information may indicate that the audio device supports either the first pair manner or the second pair manner. In some embodiments, the flag information may indicate that the audio device supports two pair manners. For example, the flag information may indicate that the audio device supports the first pair manner and the second pair manner. In a case where the audio device supports two pair manners, the audio device may broadcast the first connection configuration information and the second connection configuration information by turns. In some embodiments, the flag information may indicate that the audio device supports three or more pair manners. For example, the flag information may indicate that the audio device supports the first pair manner, the second pair manner, and the third pair manner. In a case where the audio device supports three or more pair manners, the audio device may broadcast the first connection configuration information, the second connection configuration information, and third connection configuration information that corresponds to the third pair manner by turns.

In some embodiments, the flag information may indicate region information of a region where the audio device is able to work. For example, the region information may include at least one of the following: country information, province information, city information, and district information.

For example, in a case where the region information indicated by the flag information refers to a region within the Mainland China, the audio device determines that the audio device supports the first pair manner and does not support the second pair manner. For another example, in a case where the region information indicated by the flag information refers to a region outside of the Mainland China, the audio device determines that the audio device supports the first pair manner and the second pair manner. The region outside of the Mainland China may include the United States or one or more countries in Europe, etc.

In some embodiments, the flag information may indicate whether the audio device supports a target APP. In some embodiments, the flag information may indicate whether the audio device supports a target service. In some embodiments, the flag information may indicate whether the audio device has account information of the target APP or account information of the target information.

In some embodiments, in a case where the flag information indicates that the terminal device located in a region referred by the region information does not support the target APP, the audio device determines that the audio device supports the first pair manner and does not support the second pair manner, and broadcasts the first connection configuration information. In some embodiments, in a case where the flag information indicates that the terminal device located in a region referred by the region information supports the target APP, the audio device determines that the audio device supports the first pair manner and the second pair manner, and broadcasts the first connection configuration information and the second connection configuration information. In some embodiments, in a case where the flag information indicates that the terminal device located in a region referred by the region information does not support the target service, the audio device determines that the audio device supports the first pair manner and does not support the second pair manner, and broadcasts the first connection configuration information. In some embodiments, in a case where the flag information indicates that the terminal device located in a region referred by the region information supports the target service, the audio device determines that the audio device supports the first pair manner and the second pair manner, and broadcasts the first connection configuration information and the second connection configuration information. In some embodiments, in a case where the flag information indicates that the terminal device located in a region referred by the region information has neither the account information of the target APP nor the account information of the target service, the audio device determines that the audio device supports the first pair manner and does not support the second pair manner, and broadcasts the first connection configuration information. In some embodiments, in a case where the flag information indicates that the terminal device located in a region referred by the region information has the account information of the target APP or the account information of the target service, the audio device determines that the audio device supports the first pair manner and the second pair manner, and broadcasts the first connection configuration information and the second connection configuration information.

In some embodiments, the target APP may be a Google APP, the target service may be a Google service, and the account information of the target APP or the target service may be a Google account.

In some embodiments, the target APP may be an iOS (a mobile operating system developed by the Apple Inc.) APP, the target service may be an iOS service, and the account information of the target APP or the target service may be an iOS account.

In some embodiments, the target APP may be a HUAWEI APP, an OPPO APP, and so on. The target service may be a HUAWEI service, an OPPO service, and so on. A specific type of the target APP and the target service is not limited herein.

In some embodiments, a processor of the audio device may read the flag information of the audio device from a storage (e.g., a register) of the audio device.

In some embodiments, the flag information of the audio device may be represented by a bit. For example, 0 indicates that the audio device supports the first pair manner and 1 indicates that the audio device supports the first pair manner and the second pair manner. For another example, 1 indicates that the audio device supports the first pair manner and 0 indicates that the audio device supports the first pair manner and the second pair manner. In some embodiments, the flag information of the audio device may be represented by more than one bit. A representation of the flag information of the audio device is not limited herein, as long as the pair manner that the audio device supports is able to be determined based on the flag information of the audio device.

In the embodiments of the present disclosure, the audio device may determine the pair manner that the audio device supports based on the flag information of the audio device, and thus broadcast the connection configuration information corresponding to the pair manner that the audio device supports. In other words, the audio device is able to broadcast the connection configuration information that corresponds to the configuration thereof based on the configuration thereof, which enables the audio device to establish the Bluetooth connection with the terminal device that supports the first pair manner and/or the second pair manner and further improves the resource utilizing rate.

FIG. 3 is a flowchart of still another Bluetooth connection method according to some embodiments of the present disclosure. As illustrated in FIG. 3, the method is applied to the audio device and includes the following operations.

At operation S301, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

At operation S302, in response to the audio device supporting the first pair manner and not supporting the second pair manner, broadcasting the first connection configuration information.

After the operation S301 or S302, operation S303 may be performed.

At operation S303, in response to a first connection request sent from a first terminal device, establishing a first Bluetooth connection with the first terminal device. The first connection request may be configured to request the audio device to establish the Bluetooth connection with the first terminal device.

At operation S304, synchronizing state information of the audio device to the first terminal device through the first Bluetooth connection.

In some embodiments, the audio device may synchronize the state information of the audio device to the first terminal device through the first Bluetooth connection every first specified period. In this way, the first terminal device may display at least part of the last state information of the audio device sent from the audio device, which allows the user to obtain the state information of the audio device.

In some embodiments, the first terminal device may display at least part of the state information of the audio device in the first APP of the first terminal device. In some embodiments, the first terminal device may display at least part of the state information of the audio device in a notification bar of the first terminal device. In some embodiments, the first terminal device may display at least part of the state information of the audio device in a state bar of the first terminal device. In some embodiments, the first terminal device may display at least part of the state information of the audio device in the Bluetooth configuration interface of the first terminal device.

In any embodiment of the present disclosure, the state information of the audio device may include at least one of the following: battery information of the audio device, encrypted information, information of whether the audio device is currently paired with a device, media access control (MAC) address information of the audio device, account information of the audio device, state information of whether the audio device is in the ear or out of the ear, state information of whether the audio device is in the case or out of the case, state information of whether the audio device is in the Bluetooth connection state or the Bluetooth non-connection state.

The battery information of the audio device may include at least one of the following: remaining battery power of the audio device and remaining battery time of the audio device. The remaining battery power may refer to a ratio of available power to nominal capacity.

The information of whether the audio device is currently paired with a device may include: information indicating that the audio device is not currently paired with a device, or information indicating that the audio device is currently paired with a device and/or information of the device that the audio device is currently paired with.

The account information of the audio device may be service account information of the audio device, such as Google account information.

In the embodiments of the present disclosure, the audio device synchronizes the state information of the audio device to the first terminal device through the first Bluetooth connection, which enables the first terminal device to obtain the current state information of the audio device in time, thereby allowing the user to be informed of the current state information of the audio device in time through the current state information of the audio device displayed on the first terminal device. In this way, for example, the user may be able to charge the audio device in time in a case where the remaining battery power of the audio device is relatively low.

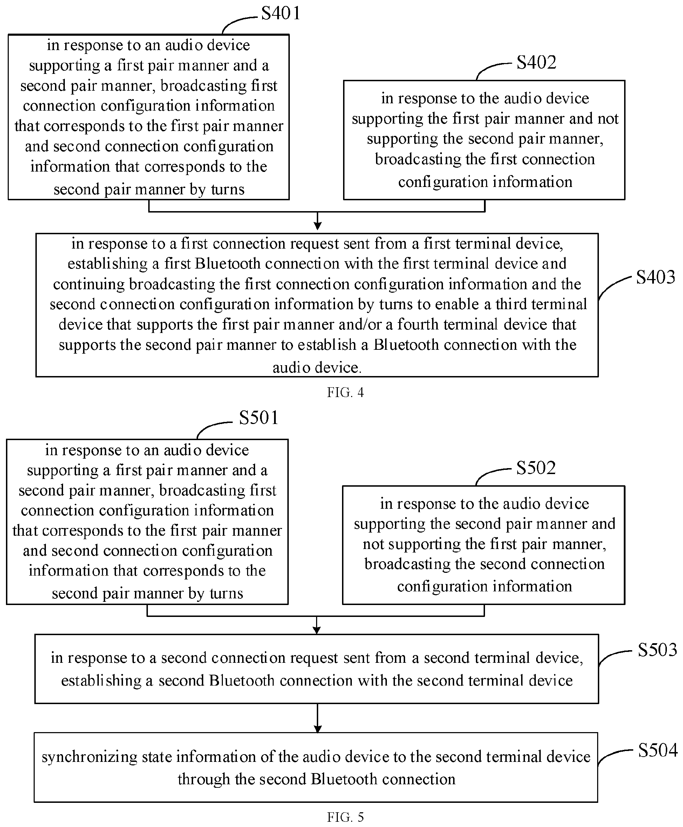

FIG. 4 is a flowchart of still another Bluetooth connection method according to some embodiments of the present disclosure. As illustrated in FIG. 4, the method is applied to the audio device and includes the following operations.

At operation S401, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

At operation S402, in response to the audio device supporting the first pair manner and not supporting the second pair manner, broadcasting the first connection configuration information.

After the operation S401 or S402, operation S403 may be performed.

At operation S403, in response to a first connection request sent from a first terminal device, establishing a first Bluetooth connection with the first terminal device and continuing broadcasting the first connection configuration information and the second connection configuration information by turns to enable or allow a third terminal device that supports the first pair manner and/or a fourth terminal device that supports the second pair manner to establish a Bluetooth connection with the audio device.

In some embodiments, the audio device may determine, according to first configuration information of the audio device or first configuration information sent from the first terminal device, to continue broadcasting the first connection configuration information and the second connection configuration information by turns. For example, the first configuration information may be configured to indicate: in response to the audio device establishing the first Bluetooth connection with the first terminal device, continuing broadcasting the first connection configuration information and the second connection configuration information by turns.

The continuing broadcasting the first connection configuration information and the second connection configuration information by turns, may include one of the following operations.

At operation (1), before the audio device is turned off, broadcasting the first connection configuration information and the second connection configuration information by turns.

At operation (2), continuing broadcasting the first connection configuration information for a first target period and continuing broadcasting the second configuration information for a second target period. The first target period may be longer than, equal to, or shorter than the second target period.

At operation (3), continuing broadcasting the first connection configuration information for the first target period and keeping broadcasting the second connection configuration information until the audio device is turned off; or alternatively, continuing broadcasting the second connection configuration information for the second target period and keeping broadcasting the first connection configuration information until the audio device is turned off.

In the embodiments of the present disclosure, in a case where the audio device establishes the first Bluetooth connection with the first terminal device, the audio device may continue broadcasting the first connection configuration information and the second connection configuration information by turns, which facilitates other terminal devices to be connected to the audio device.

After the operation S401, other operations may be performed according to some embodiments of the present disclosure. In some embodiments, in response to the audio device establishing the first Bluetooth connection with the first terminal device, the audio device may determine, according to second configuration information of the audio device or second configuration information sent from the first terminal device, to continue broadcasting the first connection configuration information and stop broadcasting the second connection configuration information, or to continue broadcasting the second connection configuration information and stop broadcasting the first connection configuration information. For example, the second configuration information may be configured to indicate: in response to the audio device establishing the first Bluetooth connection with the first terminal device, continuing broadcasting the first connection configuration information and stopping broadcasting the second connection configuration information. For another example, the second configuration information may be configured to indicate: in response to the audio device establishing the first Bluetooth connection with the first terminal device, continuing broadcasting the second connection configuration information and stopping broadcasting the first connection configuration information.

After the operation S401, other operations may be performed according to some embodiments of the present disclosure. In some embodiments, in response to the audio device establishing the first Bluetooth connection with the first terminal device, the audio device may, according to third configuration information of the audio device or third configuration information sent from the first terminal device, stop broadcasting the first connection configuration information and the second connection configuration information. For example, the third configuration information may be configured to indicate: in response to the audio device establishing the first Bluetooth connection with the first terminal device, stopping broadcasting the first connection configuration information and the second connection configuration information.

The audio device may determine an operating system type of the first terminal device and thus determine a strategy to broadcast the connection configuration information.

In some embodiments, in a case where the audio device determines that the first terminal device is the Mainland Chinese version terminal device and the operating system of the first terminal device is the iOS, the audio device is required to continue broadcasting the first connection configuration information and either continue or stop broadcasting the second connection configuration information.

In some embodiments, in a case where the audio device determines that the first terminal device is the Mainland Chinese version terminal device and the operating system of the first terminal device is non-iOS, the audio device stops broadcasting the first connection configuration information and may either stop or continue broadcasting the second connection configuration information, thereby reducing the power consumption of the audio device. In some embodiments, in a case where the audio device determines that the first terminal device is the Mainland Chinese version terminal device and the operating system of the first terminal device is non-iOS, the audio device continues broadcasting the first connection configuration information and may either stop or continue broadcasting the second connection configuration information, thereby allowing other terminals that support the first pair manner to establish the Bluetooth connection with the audio device.

In some embodiments, in a case where the audio device determines that the first terminal device is the non-Mainland Chinese version terminal device and the operating system of the first terminal device is the iOS, the audio device is required to continue broadcasting the first connection configuration information and either continue or stop broadcasting the second connection configuration information.

In some embodiments, the audio device may obtain a device flag of the first terminal device when the audio device is a process of establishing the Bluetooth connection with the first terminal device or after the audio device successfully establishes the Bluetooth connection with the first terminal device. For example, the audio device may determine the operating system type of the first terminal device based on the device flag of the first terminal device. For another example, the audio device may determine whether the first terminal device is the Mainland Chinese version or the non-Mainland Chinese version, as well as the operating system type of the first terminal device, based on the device flag of the first terminal device. In some embodiments, the device flag may be assigned by the Bluetooth Special Interest Group (SIG).

In some embodiments, the audio device is only allowed to be connected to one terminal device. In some embodiments, the audio device is allowed to be connected to at least two terminal devices, where the at least two terminal devices may or may not correspond to the same operating system.

In the embodiments of the present disclosure, in a case where the audio device establishes the first Bluetooth connection with the first terminal device, the audio device may continue broadcasting the first connection configuration information and the second connection configuration information by turns, which enables the audio device to establish the Bluetooth connection with other terminal devices.

FIG. 5 is a flowchart of a Bluetooth connection method according to some embodiments of the present disclosure. As illustrated in FIG. 5, the method is applied to the audio device and includes the following operations.

At operation S501, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

At operation S502, in response to the audio device supporting the second pair manner and not supporting the first pair manner, broadcasting the second connection configuration information.

After the operation S501 or S502, operation S503 may be performed.

At operation S503, in response to a second connection request sent from the second terminal device, establishing a second Bluetooth connection with a second terminal device. The second connection request may be configured to request the audio device to establish the Bluetooth connection with the second terminal device.

At operation S504, synchronizing state information of the audio device to the second terminal device through the second Bluetooth connection.

In some embodiments, the audio device may synchronize the state information of the audio device to the second terminal device through the second Bluetooth connection every second specified period. In this way, the second terminal device may display at least part of the last state information of the audio device sent from the audio device, which allows the user to obtain the state information of the audio device.

In some embodiments, the second terminal device may display at least part of the state information of the audio device in the second APP of the second terminal device. In some embodiments, the second terminal device may display at least part of the state information of the audio device in a notification bar of the second terminal device. In some embodiments, the second terminal device may display at least part of the state information of the audio device in a state bar of the second terminal device. In some embodiments, the second terminal device may display at least part of the state information of the audio device in the Bluetooth configuration interface of the second terminal device.

In the embodiments of the present disclosure, the audio device synchronizes the state information of the audio device to the second terminal device through the second Bluetooth connection, which enables the second terminal device to obtain current state information of the audio device in time, thereby allowing the user to be informed of the current state information of the audio device in time through the current state information of the audio device displayed on the second terminal device. In this way, for example, the user may be able to charge the audio device in time in a case where the remaining battery power of the audio device is relatively low.

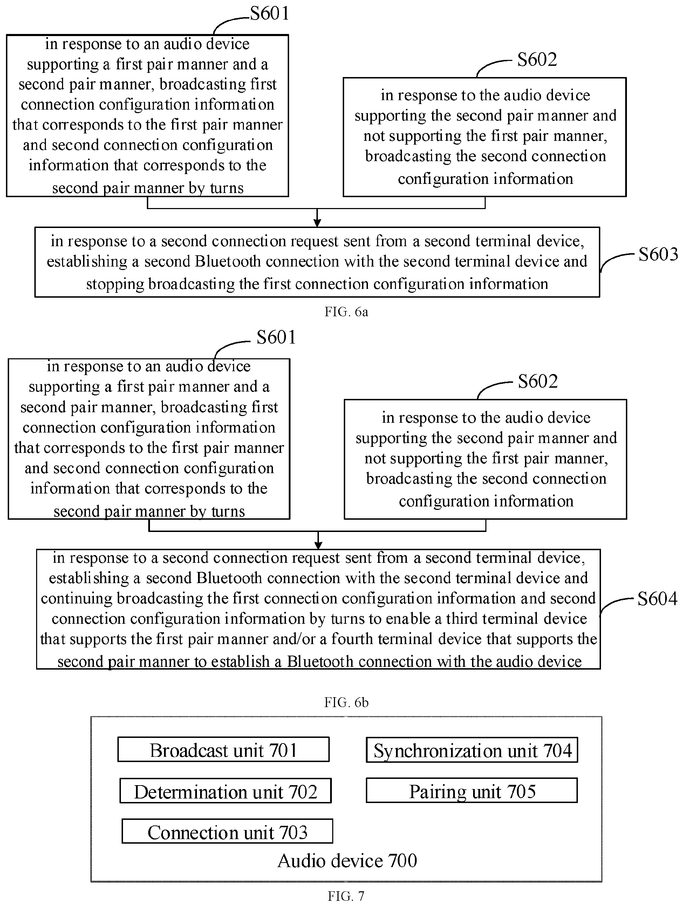

FIG. 6a is a flowchart of a Bluetooth connection method according to some embodiments of the present disclosure. As illustrated in FIG. 6a, the method is applied to the audio device and includes the following operations.

At operation S601, in response to an audio device supporting a first pair manner and a second pair manner, broadcasting first connection configuration information that corresponds to the first pair manner and second connection configuration information that corresponds to the second pair manner by turns.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

At operation S602, in response to the audio device supporting the second pair manner and not supporting the first pair manner, broadcasting the second connection configuration information.

After the operation S601 or S602, operation S603 may be performed.

At operation S603, in response to a second connection request sent from a second terminal device, establishing a second Bluetooth connection with the second terminal device and stopping broadcasting the first connection configuration information.

FIG. 6b is a flowchart of a Bluetooth connection method according to some embodiments of the present disclosure. As illustrated in FIG. 6b, the method is applied to the audio device. According to the method illustrated in FIG. 6b, operation S604 may be performed after the operation S601 or S602.

At operation S604, in response to a second connection request sent from a second terminal device, establishing a second Bluetooth connection with the second terminal device and continuing broadcasting the first connection configuration information and the second connection configuration information by turns to enable or allow a third terminal device that supports the first pair manner and/or a fourth terminal device that supports the second pair manner to establish a Bluetooth connection with the audio device.

In some embodiments, the stopping broadcasting the first connection configuration information at the operation S603, may include: stopping broadcasting the first connection configuration information and stopping broadcasting the second connection configuration information. In some embodiments, the stopping broadcasting the first connection configuration information at the operation S603, may include: stopping broadcasting the first connection configuration information and continue broadcasting the second connection configuration information.

In some embodiments, the audio device may determine, according to fourth configuration information of the audio device or fourth configuration information sent from the first terminal device, to stop broadcasting the first connection configuration information and the second connection configuration information, or to stop broadcasting the first connection configuration information and continue broadcasting the second connection configuration information. For example, the fourth configuration information may be configured to indicate: in response to the audio device establishing the second Bluetooth connection with the second terminal device, stopping broadcasting the first connection configuration information and the second connection configuration information. For another example, the fourth configuration information may be configured to indicate: in response to the audio device establishing the first Bluetooth connection with the second terminal device, stopping broadcasting the first connection configuration information and continuing broadcasting the second connection configuration information.

The audio device may determine an operating system type of the second terminal device and thus determine a strategy to broadcast of the connection configuration information.

In some embodiments, in a case where the audio device determines that the second terminal device is the non-Mainland Chinese version terminal device and the operating system of the second terminal device is the non-iOS, the audio device stops broadcasting the first connection configuration information and may either stop or continue broadcasting the second connection configuration information, which reduces the power consumption of the audio device. In some embodiments, in a case where the audio device determines that the second terminal device is the non-Mainland Chinese version terminal device and the operating system of the second terminal device is the non-iOS, the audio device continues broadcasting the first connection configuration information and may either stop or continue broadcasting the second connection configuration information, which enables other terminal devices that support the first pair manner to establish the Bluetooth connection with the audio device.

In some embodiments, the audio device may obtain a device flag of the second terminal device when the audio device is a process of establishing the Bluetooth connection with the second terminal device or after the audio device successfully establishes the Bluetooth connection with the second terminal device. For example, the audio device may determine the operating system type of the second terminal device based on the device flag of the second terminal device. For another example, the audio device may determine whether the second terminal device is the Mainland Chinese version or the non-Mainland Chinese version, as well as the operating system type of the second terminal device, based on the device flag of the second terminal device.

In the embodiments of the present disclosure, in a case where the audio device successfully establishes the second Bluetooth connection with the second terminal device, the audio device may stop broadcasting the first connection configuration information, which facilitates the audio device to save power. In some embodiments, in a case where the audio device successfully establishes the second Bluetooth connection with the second terminal device, the audio device may continue broadcasting the first connection configuration information and the second connection configuration information by turns, which enables the audio device to establish the Bluetooth connection with other terminal devices.

In the embodiments illustrated in FIG. 3 and FIG. 5, the state information of the audio device that is synchronized by the audio device to the first terminal device and the state information of the audio device that is synchronized by the audio device to the second terminal device may include a different parameter. In some embodiments, the state information of the audio device that is synchronized by the audio device to the first terminal device and the state information of the audio device that is synchronized by the audio device to the second terminal device may share the same parameter.

In the embodiments illustrated in FIG. 4 and FIG. 6, the state information of the audio device that the audio device broadcasts simultaneously on a time unit for broadcasting the first connection configuration information and the state information of the audio device that the audio device broadcasts simultaneously on another time unit for broadcasting the second connection configuration information may include a different parameter. In some embodiments, the state information of the audio device that the audio device broadcasts simultaneously on the time unit for broadcasting the first connection configuration information and the state information of the audio device that the audio device broadcasts simultaneously on the another time unit for broadcasting the second connection configuration information may share the same parameter.

In some embodiments, the state information of the audio device that is synchronized by the audio device to the first terminal device or the state information of the audio device that the audio device broadcasts simultaneously on the time unit for broadcasting the first connection configuration information may not include the MAC address information of the audio device.

In some embodiments, the state information of the audio device that is synchronized by the audio device to the second terminal device or the state information of the audio device that the audio device broadcasts simultaneously on the another time unit for broadcasting the second connection configuration information may not include the account information of the audio device.

In some embodiments, the audio device synchronizing the state information of the audio device may refer to the audio device synchronizing the state information of the audio device through an established Bluetooth connection. In this case, the audio device may determine the state information of the audio device periodically or non-periodically and synchronize the state information of the audio device to the terminal device through the established Bluetooth connection every time the state information of the audio device is determined.

In some embodiments, the audio device broadcasting the state information of the audio device may refer to the audio device broadcasting the state information of the audio device through a broadcast channel. In this case, the audio device may broadcast the state information of the audio device without a Bluetooth connection established between the audio device and the terminal device. Therefore, the audio device may still be able to broadcast the state information of the audio device after the audio device has successfully established the Bluetooth connection with the terminal device, which allows other terminal devices that are awaiting to be connected to the audio device to receive the state information of the audio device so as to learn about the state information of the audio device as early as possible.

In some embodiments, the method further includes the following operations.

In a case where the audio device receives neither the first connection request sent from the first terminal device nor the second connection request sent from the second terminal device during a pre-determined period starting from a moment when the audio device starts to broadcast the first connection configuration information and the second connection configuration information, the audio device stops broadcasting the first connection configuration information or stops broadcasting the first connection configuration information and the second connection configuration information.

The pre-determined period may be pre-configured in factory or may be assigned by the terminal device that has been connected to the audio device. The pre-determined period may be in a range from 1 minute to 5 minutes. For example, the pre-determined period may be 1 minute, 2 minutes, 3 minutes, 5 minutes, and so on.

In some embodiments, in a case where the audio device does not receive any connection request during the pre-determined period, the audio device stops broadcasting the first connection configuration information and may either continue or stop broadcasting the second connection configuration information.

In some embodiments, no matter whether the audio device receives the first connection request and/or the second connection request or not, the audio device stops broadcasting the first connection configuration information or stops broadcasting the first connection configuration information and the second connection configuration information during the pre-determined period. In this case, during the pre-determined period, regardless of whether the audio device establishes the Bluetooth connection with the terminal device or not and regardless the number of the terminal devices that audio device establishes the Bluetooth connection with, the audio device stops broadcasting the first connection configuration information or stops broadcasting the first connection configuration information and the second connection configuration information.

In some embodiments, the audio device may be capable of being received in the case. The audio device may determine the flag information of the audio device at the following moments.

In some embodiments, in response to the audio device determining that the case is opened, the audio device determines the flag information of the audio device.

In some embodiments, in response to the audio device determining that the audio device is turned on, the audio device determines the flag information of the audio device.

In some embodiments, in response to a trigger operation which is performed on a physical button of the audio device for broadcasting information, the audio device determines the flag information of the audio device.

In some embodiments, the physical button may be a power button or any other button aside from the power button. For example, in response to the user performing one or more trigger operations on the physical button or holding down the physical button, the audio device determines the flag information of the audio device. In this way, the audio device, based on the flag information of the audio device, may further broadcast the first connection configuration information that corresponds to the first pair manner and the second connection configuration information that corresponds to the second pair manner by turns, or may further broadcast the first connection configuration information.

In some embodiments, in response to the audio device receiving a broadcast indication sent from a fifth terminal device, the audio device determines the flag information of the audio device.

The fifth terminal device may be any terminal device that is currently connected to the audio device.

In some application scenarios, in response to the audio device successfully establishing the Bluetooth connection with the fifth terminal device, in a case where a user of the fifth terminal device intends to connect the fifth terminal device to other terminal devices, the fifth terminal device transmits the broadcast indication to the audio device, which enables the audio device to broadcast the pair information again and realizes the Bluetooth connection between the audio device and other terminal devices. In some embodiments, the fifth terminal device may transmit the broadcast indication to the audio device through an APP in the fifth terminal device.

In some embodiments, the audio device further broadcasts the state information of the audio device simultaneously on the time unit for broadcasting the first connection configuration information and/or the another time unit for broadcasting the second connection configuration information.

The time unit in some embodiments of the present disclosure may corresponds to a time interval. A time interval of the time unit for broadcasting the first connection configuration information and a time interval of the another time unit for broadcasting the second connection configuration information may or may not have the same length.

In the embodiments of the present disclosure, the audio device broadcasts the state information of the audio device simultaneously with the first connection configuration information, which enables the first terminal device and/or the second terminal device to receive the state information of the audio device before the audio device successfully establishes the Bluetooth connection with the first terminal device and/or the second terminal device, thereby allowing the first terminal device and/or the second terminal device to determine the state information of the audio device as early as possible. After the audio device establishes the Bluetooth connection with the first terminal device and/or the second terminal device, in response to the audio device continuing broadcasting the first connection configuration information and/or the second connection configuration information, the first terminal device and/or the second terminal device may still receive the state information of the audio device that the audio device broadcasts so as to learn about the current state information of the audio device in real time.

The following illustrates the pairing between the audio device and the first terminal device and/or the second terminal device.

In some embodiments, the method further includes the following operations.

In response to a first pairing request sent from the first terminal device, the audio device performs the pairing with the first terminal device. The first pairing request is determined by an operation instruction of the audio device displayed on the first APP of the first terminal device.

In this way, in response to the first terminal device launching the first APP, the first APP may display the audio device (e.g., a name of the audio device) or the first APP may display indication information of whether the first terminal device is paired with the audio device. In response to the user triggering the audio device that is displayed or the user triggering the option that indicates to perform the pairing with the audio device, the first terminal device generates the first pairing request according to the trigger of the user and sends the first pairing request to the audio device.

In some embodiments, in response to the first terminal device determining that the Bluetooth pairing between the first terminal device and the audio device is successfully performed, the first terminal device sends the first connection request to the audio device, which allows the audio device to establish the first Bluetooth connection with the first terminal device based on the first connection request.

In some embodiments, the method further includes the following operations.

In response to a second pairing request sent from the second terminal device, the audio device perform the pairing with the second terminal device. The second pairing request is determined by an operation instruction of the audio device displayed on the second APP of the second terminal device.

In this way, in response to the second terminal device launching the second APP, the second APP may display the audio device (e.g., a name of the audio device) or the second APP may display indication information of whether the second terminal device is paired with the audio device. In response to the user triggering the audio device that is displayed or the user triggering the option that indicates to perform the pairing with the audio device, the second terminal device generates the second pairing request according to the trigger of the user and sends the second pairing request to the audio device.

In some embodiments, in response to the second terminal device determining that the Bluetooth pairing between the second terminal device and the audio device is successfully performed, the second terminal device sends the second connection request to the audio device, which allows the audio device to establish the second Bluetooth connection with the second terminal device based on the second connection request.

In the embodiments of the present disclosure, version flag information of the TWS earphone may be pre-configured during the manufacturing of the TWS earphone. The version flag information may, for example, indicate region attribute information (corresponding to the region information above). In response to the TWS earphone being turned on, the TWS earphone determines a service that the TWS earphone supports, i.e., contents that the TWS earphone is required to broadcast, based on a flag bit of the version flag information. Then, in a case where the TWS earphone is the non-Mainland Chinese version, the TWS earphone broadcasts Google fast finding (corresponding to the second connection configuration information above) and self-defined fast finding (corresponding to the first connection configuration information above), and etc. by turns. In a case where the TWS earphone is the Mainland Chinese version, the TWS earphone only broadcasts the self-defined fast finding.

In a case where the TWS earphone broadcasts the Google fast finding and the self-defined fast finding by turns, the following operations may be performed.

In response to the Bluetooth connection being successfully established between the TWS earphone and a device and the TWS earphone determining that the device is the iOS device (the iOS device includes the Mainland Chinese version iOS device or the non-Mainland Chinese version iOS device, and the Mainland Chinese version iOS device or the non-Mainland Chinese version iOS device sends the Bluetooth connection request to establish the Bluetooth connection based on the detected self-defined fast finding), the TWS earphone keeps broadcasting the self-defined fast finding, which enables an APP of the iOS device to detect the TWS earphone. In this way, the TWS earphone broadcasts both the Google fast finding and the self-defined fast finding continuously.

In response to the Bluetooth connection being successfully established between the TWS earphone and a device and the TWS earphone determining that the device is the non-iOS device (the non-iOS device includes the Mainland Chinese version non-iOS device or the non-Mainland Chinese version non-iOS device, the Mainland Chinese version non-iOS device sends the Bluetooth connection request to establish the Bluetooth connection based on the detected self-defined fast finding, and the non-Mainland Chinese version non-iOS device sends the Bluetooth connection request to establish the Bluetooth connection based on the detected Google fast finding), the TWS earphone stops broadcasting the self-defined fast finding and continues broadcasting the Google fast finding.

In response to the TWS earphone failing to establish the Bluetooth connection with a device within 120 seconds (corresponding to the pre-determined period above), the TWS earphone stops broadcasting the self-defined fast finding after the 120 seconds.

In a case where the TWS earphone only broadcasts the self-defined fast finding, the following operations may be performed.

In response to the Bluetooth connection being successfully established between the TWS earphone and a device and the TWS earphone determining that the device is the iOS device (the iOS device is the Mainland Chinese version iOS device, and the Mainland Chinese version iOS device sends the Bluetooth connection request to establish the Bluetooth connection based on the detected self-defined fast finding), the TWS earphone keeps broadcasting the self-defined fast finding, which enables the APP of the iOS device to detect the TWS earphone.

In response to the Bluetooth connection being successfully established between the TWS earphone and a device and the TWS earphone determining that the device is the non-iOS device (the non-iOS device is the Mainland Chinese version non-iOS device, and the Mainland Chinese version non-iOS device sends the Bluetooth connection request to establish the Bluetooth connection based on the detected self-defined fast finding), the TWS earphone stops broadcasting the self-defined fast finding. In some embodiments, in response to the Bluetooth connection being successfully established between the TWS earphone and a device and the TWS earphone determining that the device is the non-iOS device, the TWS earphone continues broadcasting the self-defined fast finding, which allows other Mainland Chinese version non-iOS devices to establish the Bluetooth connection with the audio device.

In response to the TWS earphone failing to establish the Bluetooth connection with a device within 120 seconds (corresponding to the pre-determined period above), the TWS earphone stops broadcasting the self-defined fast finding after the 120 seconds.

Based on the embodiments mentioned above, some embodiments of the present disclosure provide an audio device. Each unit included in the audio device and each module included in each unit may be realized by a processor in a terminal device or may be realized by a specific logic circuit.

FIG. 7 is a schematic view of an audio device according to some embodiments of the present disclosure. As illustrated in FIG. 7, an audio device 700 includes the following units.

A broadcast unit 701 is configured to broadcast the first connection configuration information that corresponds to the first pair manner and the second connection configuration information that corresponds to the second pair manner by turns in response to the audio device supporting the first pair manner and the second pair manner.

The first connection configuration information is configured to establish a Bluetooth connection between the audio device and a first terminal device that supports the first pair manner, and the second connection configuration information is configured to establish a Bluetooth connection between the audio device and a second terminal device that supports the second pair manner.

In some embodiments, the audio device 700 further includes a determination unit 702. The determination unit is configured to determine the first connection configuration information and the second connection configuration information.

In some embodiments, the broadcast unit 701 is further configured to broadcast the first connection configuration information in response to the audio device supporting the first pair manner and not supporting the second pair manner.

In some embodiments, the broadcast unit 701 is further configured to broadcast the second connection configuration information in response to the audio device supporting the second pair manner and not supporting the first pair manner.

In some embodiments, the determination unit 702 is further configured to: determine the flag information of the audio device; and determine that the audio device supports the first pair manner and the second pair manner based on the flag information, or determine that the audio device supports the first pair manner and does not support the second pair manner based on the flag information, or determine that the audio device supports the second pair manner and does not support the first pair manner based on the flag information.

In some embodiments, the audio device 700 further includes a connection unit 703 and a synchronization unit 704.

The connection unit 703 is configured to establish the first Bluetooth connection with the first terminal device in response to the first connection request sent from the first terminal device.

The synchronization unit 704 is configured to synchronize the state information of the audio device to the first terminal device through the first Bluetooth connection.

In some embodiments, the broadcast unit 701 is further configured to continue broadcasting the first connection configuration information and the second connection configuration information by turns to allow the third terminal device that supports the first pair manner and/or the fourth terminal device that supports the second pair manner to establish the Bluetooth connection with the audio device in response to the first connection request sent from the first terminal device and the audio device establishing the first Bluetooth connection with the first terminal device.

In some embodiments, the audio device 700 further includes a connection unit 703 and a synchronization unit 704.

The connection unit 703 is configured to establish the second Bluetooth connection with the second terminal device in response to the second connection request sent from the second terminal device.

The synchronization unit 704 is configured to synchronize the state information of the audio device to the second terminal device through the second Bluetooth connection.

In some embodiments, the broadcast unit 701 is further configured to stop broadcasting the first connection configuration information or continue broadcasting the first connection configuration information and the second connection configuration information by turns to allow the third terminal device that supports the first pair manner and/or the fourth terminal device that supports the second pair manner to establish the Bluetooth connection with the audio device in response to the second connection request sent from the second terminal device and the audio device establishing the second Bluetooth connection with the second terminal device.

In some embodiments, the broadcast unit 701 is further configured to stop broadcasting the first connection configuration information or stop broadcasting the first connection configuration information and the second connection configuration information in response to the audio device receiving neither the first connection request sent from the first terminal device nor the second connection request sent from the second terminal device during the pre-determined period starting from the moment when the audio device starts to broadcast the first connection configuration information and the second connection configuration information.

In some embodiments, the audio device is capable of being received in the case and the determination unit 702 is further configured to:
determine the flag information of the audio device in response to determining that the case is opened; or
determine the flag information of the audio device in response to determining that the audio device is turned on; or
determine the flag information of the audio device in response to the trigger operation which is performed on the physical button of the audio device for broadcasting information; or
determine the flag information of the audio device in response to the broadcast indication sent from the fifth terminal device.

In some embodiments, the broadcast unit 701 further broadcasts the state information of the audio device simultaneously on a time unit for broadcasting the first connection configuration information and/or another time unit for broadcasting the second connection configuration information.

In some embodiments, the audio device 700 further includes a pairing unit 705. The pairing unit 705 is configured to:
perform the pairing with the first terminal device in response to the first pairing request sent from the first terminal device, where the first pairing request is determined by an operation instruction of the audio device displayed on the first APP of the first terminal device; and/or
perform the pairing with the second terminal device in response to the second pairing request sent from the second terminal device, where the second pairing request is determined by an operation instruction of the audio device displayed on the second APP of the second terminal device.

In the embodiments of the present disclosure, the TWS earphone may support the fast finding and the fast pair on either the non-Mainland Chinese version mobile phone or the Mainland Chinese version mobile phone. The TWS earphone may support the Google fast pair, the pre-defined fast pair, and other manners, as well as support the iOS and the Android, and other operating systems.

The above device embodiments and the above method embodiments share the similar description and the similar technical effect. Technical details that are not disclosed in the device embodiments of the present disclosure may refer to the method embodiments of the present disclosure.

It is to be noted that, in some embodiments of the present disclosure, in a case of where the above Bluetooth connection method is realized in the form of a software function module and is sold or used as a stand-alone product, such Bluetooth connection method may be stored in a computer storage medium. In other words, the technical solutions of the embodiments of the present disclosure may essentially be or a part of the embodiments of the present disclosure that contributes to solve the technical problems in the related art may be realized in the form of a software product. The computer software product is stored in a storage medium that includes a plurality of instructions. The plurality of instructions may be executed to cause the audio device to perform all or a part of the methods described in the embodiments of the present disclosure.

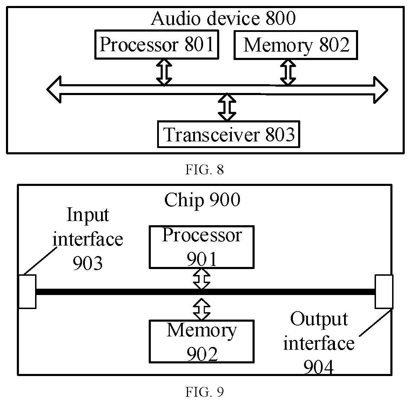

FIG. 8 is a structural block view of an audio device according to some embodiments of the present disclosure. As illustrated in FIG. 8, a hardware entity of an audio device 800 includes a processor 801 and a memory 802. The memory 802 stores a computer program that is able to be executed by the processor 801. When the computer program is executed by the processor 801, the processor 801 is caused to perform the operations of the methods in any one of the embodiments mentioned above.

The memory 802 stores the computer program that is able to be executed by the processor. The memory 802 is configured to store an instruction or an application that is executable by the processor 801 and cache data in each module of the processor 801 and the audio device 800 that is processed or to be processed (e.g., image data, audio data, voice communication data, and video communication data). The memory 802 may be realized by a flash or a random access memory (RAM).

When the computer program is executed by the processor 801, the processor 801 is caused to perform the operations of the Bluetooth connection method mentioned in any one of the embodiments mentioned above. The processor 801 generally controls an overall operation of the audio device 800.

In some embodiments, the memory 802 may be a device independent of the processor 801 or may be integrated in the processor 801.

In some embodiments, as illustrated in FIG. 8, the audio device 800 may further include a transceiver 803. The processor 801 may control the transceiver 803 to communicate with other devices, for example, to transmit information or data to other devices, or to receive information or data from other devices.

In some embodiments, the transceiver 803 may include a transmitter and a receiver. The transceiver 803 may further include one or more antennae.

Some embodiments of the present disclosure provide a computer storage medium. The computer storage medium stores one or more programs. When the one or more programs are executed by one or more processors, the one or more processors are caused to perform the operations of the Bluetooth connection method mentioned in any one of the embodiments mentioned above.

It is to be noted that, the embodiments of the audio device and the computer storage medium above and the above method embodiments share the similar description and the similar technical effect. Technical details that are not disclosed in the embodiments of the audio device and the computer storage medium above may refer to the above method embodiments.

FIG. 9 is a structural block view of a chip according to some embodiments of the present disclosure. As illustrated in FIG. 9, a chip 900 includes a processor 901. The processor 901 is configured to call and execute a computer program from a memory. When the computer program is called and executed by the processor 901, the processor 901 is caused to perform the operations of the method in any one of the embodiments of the present disclosure.

In some embodiments, as illustrated in FIG. 9, the chip 900 may further include a memory 902. The process 901 may call and execute a computer program from the memory 902. When the computer program is called and executed by the processor 901, the processor 901 is caused to perform the methods in the embodiments of the present disclosure.

The memory 902 may be a device independent of the processor 901 or may be integrated in the processor 901.

In some embodiments, the chip 900 may further include an input interface 903. The processor 901 may control the input interface 903 to communicate with other devices or chips, i.e., to obtain information or data transmitted from other devices or chips.

In some embodiments, the chip 900 may further include an output interface 904. The processor 901 may control the output interface 904 to communicate with other devices or chips, i.e., to transmit information or data to other devices or chips.

In some embodiments, the chip may be applied to a network device provided by some embodiments of the present disclosure and may realize a corresponding process realized by the network device in each method according to the embodiments of the present disclosure, which will not be repeated herein for the sake of brevity.

In some embodiments, the chip may be applied to the terminal device or mobile device provided by the embodiments of the present disclosure and may realize a corresponding process realized by the terminal device or mobile device in each method according to the embodiments of the present disclosure, which will not be repeated herein for the sake of brevity.

It is to be understood that, the chip mentioned in the embodiments of the present disclosure may further refer to a system on chip.

The above processor may include an integration of one or more of the following: an application specific integrated circuit (ASIC), a digital signal processor (DSP), a digital signal processing device (DSPD), a programmable logic device (PLD), a field programmable gate array (FPGA), a central processing unit (CPU), a graphics processing unit (GPU), a neural-network processing unit (NPU), a controller, a microcontroller, a microprocessor, a programmable logic device, a discrete gate or a transistor logic device, and a discrete hardware component. It is to be understood that, the electronic component that realizes the above functions of the process may further be other components, which is not limited by the embodiments of the present disclosure.

The above computer storage medium or memory may include an integration of one or more of the following: a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, a compact disc read-only memory (CD-ROM), and other memories. The above computer storage medium or memory may further be various terminals including one of the above mentioned memories or any combination thereof, such as a mobile phone, a computer, a tablet device, a personal digital assistant, and so on.

It should be understood that, references throughout the specification to "an embodiment", "embodiments of the present disclosure", "above mentioned embodiments", or "some embodiments" means that a particular feature, structure, or characteristic related to the embodiments are included in at least one embodiment of the present disclosure. Therefore, "an embodiment", "embodiments of the present disclosure", "above mentioned embodiments", or "some embodiments" throughout the specification may not necessarily refer to the same embodiments. Moreover, such particular feature, structure, or characteristic may be combined into one or more embodiments in any appropriate manner. It should be understood that, in some embodiments of the present disclosure, a serial number corresponding to each operation above may not imply an order of execution. The order of execution for each operation needs to be determined based on the function and the inherent logic, and the serial number may not limit the process of the embodiments of the present disclosure. The serial number mentioned in the embodiments of the present disclosure is for descriptive purposes only and do not imply an embodiment being superior or inferior to another embodiment.

Unless otherwise specified, the audio device performing any operation in the embodiments of the present disclosure may refer to a processor of the audio device performing such operation. Unless specifically stated, the embodiments of the present disclosure do not limit the order in which the audio device performs the following operations. In addition, different embodiments may adopt the same manner or different manners to process the data. It is to be further noted that, any operation in the embodiments of the present disclosure may be independently executed by the audio device, i.e., the audio device may execute any of the operations in the above embodiments without relying on the execution of other operations.

In some embodiments of the present disclosure, it is to be understood that, the disclosed devices and methods may be realized by other means. The embodiments of devices mentioned above are merely illustrative, for example, the division of the mentioned units is merely a logical functional division, and mentioned units may be divided in other ways in the actual implementation. For example, a plurality of units or components may be combined or integrated into another system, or some features may be ignored or not be implemented. In addition, a coupling, a direct coupling, or a communication connection between the components illustrated or discussed may be through some interfaces. An indirect coupling or the communication connection between the devices or units may be electrical, mechanical, and so on.

Units illustrated as separate components may or may not be physically separated. A component illustrated as a unit may or may not be a physical unit. The components may be located at one place or may be located in more than one network unit. A part or all of the components may be chosen to realize the technical solutions of the embodiments based on actual needs.

In addition, for functional units in the embodiments of the present disclosure, all of which may be integrated in one processing unit, each of which may be implemented as an independent unit, or two or more of which may be integrated in one unit. The aforementioned integrated unit may be implemented in the form of hardware or in the form of a functional unit that includes hardware and software.

The methods disclosed in the method embodiments of the present disclosure may be arbitrarily combined, as long as they do not conflict with one another, in order to obtain a new method embodiment.

The features disclosed in the product embodiments of the present disclosure may be arbitrarily combined, as long as they do not conflict with one another, in order to obtain a new product embodiment.

The features disclosed in the method embodiments or device embodiments of the present disclosure may be arbitrarily combined, as long as they do not conflict with one another, in order to obtain a new method embodiment or a new device embodiment.

Any ordinary skilled in the art may understand that, a part of or all the operations in the method embodiments may be implemented by a hardware related to the program instruction. The aforementioned program may be stored in the computer storage medium. The execution of the program may include the operations in the method embodiments above. The aforementioned storage medium may include a removable storage device, a read only memory (ROM), a disk or CD-ROM, and other mediums that are able to store program code.

In some embodiments, the integrated unit mentioned in some embodiments of the present disclosure may be stored in the computer storage medium, in case of the integrated unit is implemented in the form of the software function module and is sold or used as a stand-alone product. In other words, the technical solutions of the embodiments of the present disclosure may essentially be or a part of the embodiments of the present disclosure that contributes to solve the technical problems in the related art may be realized in the form of the software product. The computer software product is stored in the storage medium that includes a plurality of instructions. The plurality of instructions may be executed to cause a computer device (may be a personal computer, a server, or a network device, etc.) to perform all or a part of the methods described in the embodiments of the present disclosure. The aforementioned storage medium includes a removable storage device, a ROM, a disk or CD-ROM, and other mediums that are able to store program code.

In the embodiments of the present disclosure, the descriptions of the same operations and the same contents in different embodiments may be cross-referenced. In the embodiments of the present disclosure, the term "and" may not imply the order of the operations. For example, in a case where the audio device executes A and executes B, the audio device may execute A first and then execute B, or the audio device may execute B first and then execute A, or the audio device may execute A and B at the same time.

The singular forms, such as "a", "said", and "the", used in the embodiments of the present disclosure and the claims may further be intended to cover the plural forms, unless the context particularly indicates otherwise.

It is to be understood that, the term "and/or" used herein is merely to describe an association relationship of associated objects, indicating that three relationships may exist. For example, A and/or B may refer to: A alone, both A and B, and B alone. In addition, the character "/" herein generally indicates an "or" relationship between the associated objects.

It is to be noted that, in the embodiments of the present disclosure, all of the operations may be performed or some of the operations may be performed, as long as a complete technical solution is ensured to be formed.

The above is only some embodiments of the present disclosure, but the scope of the present disclosure is not limited thereto. The scope of protection is however only defined by the appended claims.

### INDUSTRIAL APPLICABILITY

The embodiments of the present disclosure enable or allow the first terminal device that supports the first pair manner and/or the second terminal device that supports the second pair manner to establish the Bluetooth connection with the audio device, which avoids a case where the terminal device that only supports another pair manner is not able to establish the Bluetooth connection with the audio device due to the audio device only broadcasting the first connection configuration information or the second connection configuration information, thereby improving the success rate of the Bluetooth connection between the terminal device and the audio device. In addition, the terminal device is able to directly detect the connection configuration information that the audio device broadcasts, without the need of sending the connection configuration request through the Bluetooth configuration interface of the terminal device to obtain the connection configuration information of the audio device, thereby further improving the efficiency of Bluetooth connection between the terminal device and the audio device.

## Claims

1. A Bluetooth connection method, performed by an audio device, comprising:
in response to the audio device supporting a first pairing manner and a second pairing manner, broadcasting (S101, S201, S301, S401, S501, S601) first connection configuration information that corresponds to the first pairing manner and second connection configuration information that corresponds to the second pairing manner by turns;
wherein the first connection configuration information is configured to establish a Bluetooth connection between the audio device and a first terminal device that supports the first pairing manner, and the second connection configuration information is configured to establish a Bluetooth connection between the audio device and a second terminal device that supports the second pairing manner;
**characterized in that** the first pairing manner is a non-Google fast pairing manner and the second pairing manner is a Google fast pairing manner.

2. The method as claimed in claim 1, further comprising:
in response to a first connection request sent from the first terminal device, establishing (S303) a first Bluetooth connection with the first terminal device; and
synchronizing (S304) state information of the audio device to the first terminal device through the first Bluetooth connection.

3. The method as claimed in any one of claims 1-2, further comprising:
in response to a first connection request sent from the first terminal device, establishing (S403) a first Bluetooth connection with the first terminal device and continuing broadcasting the first connection configuration information and the second connection configuration information by turns to enable a third terminal device that supports the first pairing manner and/or a fourth terminal device that supports the second pairing manner to establish a Bluetooth connection with the audio device.

4. The method as claimed in any one of claims 1-3, further comprising:
in response to a second connection request sent from the second terminal device, establishing (S503) a second Bluetooth connection with the second terminal device; and
synchronizing (S504) state information of the audio device to the second terminal device through the second Bluetooth connection.

5. The method as claimed in any one of claims 1-4, further comprising:
in response to a second connection request sent from the second terminal device, establishing (S603) a second Bluetooth connection with the second terminal device and stopping broadcasting the first connection configuration information; or
in response to a second connection request sent from the second terminal device, establishing (S604) a second Bluetooth connection with the second terminal device and continuing broadcasting the first connection configuration information and second connection configuration information by turns to enable a third terminal device that supports the first pairing manner and/or a fourth terminal device that supports the second pairing manner to establish a Bluetooth connection with the audio device.

6. The method as claimed in any one of claims 1-5, further comprising:
in response to receiving neither a first connection request sent from the first terminal device nor a second connection request sent from the second terminal device during a pre-determined period starting from a moment when the audio device starts to broadcast the first connection configuration information and the second connection configuration information, stopping broadcasting the first connection configuration information; or
in response to receiving neither a first connection request sent from the first terminal device nor a second connection request sent from the second terminal device during a pre-determined period starting from a moment when the audio device starts to broadcast the first connection configuration information and the second connection configuration information, stopping broadcasting the first connection configuration information and the second connection configuration information.

7. An audio device (700), comprising:
a broadcast unit (701), configured to broadcast first connection configuration information that corresponds to a first pairing manner and second connection configuration information that corresponds to a second pairing manner by turns in response to the audio device supporting the first pairing manner and the second pairing manner;
wherein the first connection configuration information is configured to establish a Bluetooth connection between the audio device and a first terminal device that supports the first pairing manner, and the second connection configuration information is configured to establish a Bluetooth connection between the audio device and a second terminal device that supports the second pairing manner;
**characterized in that** the first pairing manner is a non-Google fast pairing manner and the second pairing manner is a Google fast pairing manner.

8. The audio device (700) as claimed in claim 7, further comprising:
a connection unit (703), configured to establish a first Bluetooth connection with a first terminal device in response to a first connection request sent from the first terminal device or establish a second Bluetooth connection with the second terminal device in response to a second connection request sent from the second terminal device; and
a synchronization unit (704), configured to synchronize state information of the audio device to the first terminal device through the first Bluetooth connection or synchronize state information of the audio device to the second terminal device through the second Bluetooth connection.

9. The audio device (700) as claimed in any one of claims 7-8, wherein the audio device (700) further broadcasts state information of the audio device simultaneously on a time unit for broadcasting the first connection configuration information and/or another time unit for broadcasting the second connection configuration information.

## Patentansprüche

1. Bluetooth-Verbindungsverfahren, das von einer Audiovorrichtung durchgeführt wird, umfassend:
als Reaktion darauf, dass die Audiovorrichtung eine erste Kopplungsart und eine zweite Kopplungsart unterstützt, abwechselndes Rundsenden (S101, S201, S301, S401, S501, S601) erster Verbindungskonfigurationsinformationen, die der ersten Kopplungsart entsprechen, und zweiter Verbindungskonfigurationsinformationen, die der zweiten Kopplungsart entsprechen;
wobei die ersten Verbindungskonfigurationsinformationen dazu ausgestaltet sind, eine Bluetooth-Verbindung zwischen der Audiovorrichtung und einer ersten Endgerätvorrichtung herzustellen, welche die erste Kopplungsart unterstützt, und die zweiten Verbindungskonfigurationsinformationen dazu ausgestaltet sind, eine Bluetooth-Verbindung zwischen der Audiovorrichtung und einer zweiten Endgerätvorrichtung herzustellen, welche die zweite Kopplungsart unterstützt;
**dadurch gekennzeichnet, dass** die erste Kopplungsart eine Nicht-Google-Fast-Pair-Kopplungsart ist und die zweite Kopplungsart eine Google-Fast-Pair-Kopplungsart ist.

2. Verfahren nach Anspruch 1, ferner umfassend:
als Reaktion auf eine erste Verbindungsanforderung, die von der ersten Endgerätvorrichtung gesendet wird, Herstellen (S303) einer ersten Bluetooth-Verbindung mit der ersten Enggerätvorrichtung; und
Synchronisieren (S304) von Zustandsinformationen der Audiovorrichtung mit der ersten Endgerätvorrichtung durch die erste Bluetooth-Verbindung.

3. Verfahren nach einem der Ansprüche 1 bis 2, ferner umfassend:
als Reaktion auf eine erste Verbindungsanforderung, die von der ersten Endgerätvorrichtung gesendet wird, Herstellen (S403) einer ersten Bluetooth-Verbindung mit der ersten Endgerätvorrichtung und Fortsetzen des abwechselnden Rundsendens der ersten Verbindungskonfigurationsinformationen und der zweiten Verbindungskonfigurationen, um es einer dritten Endgerätvorrichtung, welche die erste Kopplungsart unterstützt, und/oder einer vierten Endgerätvorrichtung, welche die zweite Kopplungsart unterstützt, zu ermöglichen eine Bluetooth-Verbindung mit der Audiovorrichtung herzustellen.

4. Verfahren nach einem der Ansprüche 1 bis 3, ferner umfassend:
als Reaktion auf eine zweite Verbindungsanforderung, die von der zweiten Endgerätvorrichtung gesendet wird, Herstellen (S503) einer zweiten Bluetooth-Verbindung mit der zweiten Endgerätvorrichtung; und
Synchronisieren (S504) von Zustandsinformationen der Audiovorrichtung mit der zweiten Endgerätvorrichtung durch die zweite Bluetooth-Verbindung.

5. Verfahren nach einem der Ansprüche 1 bis 4, ferner umfassend:
als Reaktion auf eine zweite Verbindungsanforderung, die von der zweiten Endgerätvorrichtung gesendet wird, Herstellen (S603) einer zweiten Bluetooth-Verbindung mit der zweiten Endgerätvorrichtung und Anhalten des Rundsendens der ersten Verbindungskonfigurationsinformationen; oder
als Reaktion auf eine zweite Verbindungsanforderung, die von der zweiten Endgerätvorrichtung gesendet wird, Herstellen (S604) einer zweiten Bluetooth-Verbindung mit der zweiten Endgerätvorrichtung und Fortsetzen des abwechselnden Rundsendens der ersten Verbindungskonfigurationsinformationen und der zweiten Verbindungskonfigurationsinformationen, um es einer dritten Endgerätvorrichtung, welche die erste Kopplungsart unterstützt, und/oder einer vierten Endgerätvorrichtung, welche die zweite Kopplungsart unterstützt, zu ermöglichen, eine Bluetooth-Verbindung mit der Audiovorrichtung herzustellen.

6. Verfahren nach einem der Ansprüche 1 bis 5, ferner umfassend:
als Reaktion auf das Empfangen weder einer ersten Verbindungsanforderung, die von der ersten Endgerätvorrichtung gesendet wird, noch einer zweiten Verbindungsanforderung, die von der zweiten Endgerätvorrichtung gesendet wird, während einer vorbestimmten Periode, die zu einem Zeitpunkt beginnt, zu dem die Audiovorrichtung das Rundsenden der ersten Verbindungskonfigurationsinformationen und der zweiten Verbindungskonfigurationsinformationen beginnt, Anhalten des Rundsendens der ersten Verbindungskonfigurationsinformationen; oder
als Reaktion auf das Empfangen weder einer ersten Verbindungsanforderung, die von der ersten Endgerätvorrichtung gesendet wird, noch einer zweiten Verbindungsanforderung, die von der zweiten Endgerätvorrichtung gesendet wird, während einer vorbestimmten Periode, die zu einem Zeitpunkt beginnt, zu dem die Audiovorrichtung das Rundsenden der ersten Verbindungskonfigurationsinformationen und der zweiten Verbindungskonfigurationsinformationen beginnt, Anhalten des Rundsendens der ersten Verbindungskonfigurationsinformationen und der zweiten Verbindungskonfigurationsinformationen.

7. Audiovorrichtung (700), umfassend:
eine Rundsendeeinheit (701), die dazu ausgestaltet ist, als Reaktion darauf, dass die Audiovorrichtung die erste Kopplungsart und die zweite Kopplungsart unterstützt, abwechselnd erste Verbindungskonfigurationsinformationen, die einer ersten Kopplungsart entsprechen, und zweite Verbindungskonfigurationsinformationen, die einer zweiten Kopplungsart entsprechen, rundzusenden;
wobei die ersten Verbindungskonfigurationsinformationen dazu ausgestaltet sind, eine Bluetooth-Verbindung zwischen der Audiovorrichtung und einer ersten Endgerätvorrichtung herzustellen, welche die erste Kopplungsart unterstützt, und die zweiten Verbindungskonfigurationsinformationen dazu ausgestaltet sind, eine Bluetooth-Verbindung zwischen der Audiovorrichtung und einer zweiten Endgerätvorrichtung herzustellen, welche die zweite Kopplungsart unterstützt;
**dadurch gekennzeichnet, dass** die erste Kopplungsart eine Nicht-Google-Fast-Pair-Kopplungsart ist und die zweite Kopplungsart eine Google-Fast-Pair-Kopplungsart ist.

8. Audiovorrichtung (700) nach Anspruch 7, ferner umfassend:
eine Verbindungseinheit (703), die dazu ausgestaltet ist, eine erste Bluetooth-Verbindung mit einer ersten Endgerätvorrichtung als Reaktion auf eine erste Verbindungsanforderung herzustellen, die von der ersten Endgerätvorrichtung gesendet wird, oder eine zweite Bluetooth-Verbindung mit der zweiten Endgerätvorrichtung als Reaktion auf eine zweite Verbindungsanforderung herzustellen, die von der zweiten Endgerätvorrichtung gesendet wird; und
eine Synchronisierungseinheit (704), die dazu ausgestaltet ist, Zustandsinformationen der Audiovorrichtung mit der ersten Endgerätvorrichtung durch die erste Bluetooth-Verbindung zu synchronisieren oder Zustandsinformationen der Audiovorrichtung mit der zweiten Endgerätvorrichtung durch die zweite Bluetooth-Verbindung zu synchronisieren.

9. Audiovorrichtung (700) nach einem der Ansprüche 7 bis 8, wobei die Audiovorrichtung (700) ferner Zustandsinformationen der Audiovorrichtung simultan auf einer Zeiteinheit zum Rundsenden der ersten Verbindungskonfigurationsinformationen und/oder einer anderen Zeiteinheit zum Rundsenden der zweiten Verbindungskonfigurationsinformationen rundsendet.

## Revendications

1. Procédé de connexion Bluetooth, réalisé par un dispositif audio, comprenant :
en réponse au fait que le dispositif audio prend en charge un premier mode d'appariement et un deuxième mode d'appariement, la diffusion (S101, S201, S301, S401, S501, S601) de premières informations de configuration de connexion qui correspondent au premier mode d'appariement et de deuxièmes informations de configuration de connexion qui correspondent au deuxième mode d'appariement tour à tour ;
dans lequel les premières informations de configuration de connexion sont configurées pour établir une connexion Bluetooth entre le dispositif audio et un premier dispositif terminal qui prend en charge le premier mode d'appariement, et les deuxièmes informations de configuration de connexion sont configurées pour établir une connexion Bluetooth entre le dispositif audio et un deuxième dispositif terminal qui prend en charge le deuxième mode d'appariement ;
**caractérisé en ce que** le premier mode d'appariement est un mode d'appariement rapide non-Google et le deuxième mode d'appariement est un mode d'appariement rapide Google.

2. Procédé selon la revendication 1, comprenant en outre :
en réponse à une première requête de connexion envoyée par le premier dispositif terminal, l'établissement (S303) d'une première connexion Bluetooth avec le premier dispositif terminal ; et
la synchronisation (S304) d'informations d'état du dispositif audio avec le premier dispositif terminal par le biais de la première connexion Bluetooth.

3. Procédé selon l'une quelconque des revendications 1 à 2, comprenant en outre :
en réponse à une première requête de connexion envoyée par le premier dispositif terminal, l'établissement (S403) d'une première connexion Bluetooth avec le premier dispositif terminal et la poursuite de la diffusion des premières informations de configuration de connexion et des deuxièmes informations de configuration de connexion tour à tour pour permettre à un troisième dispositif terminal qui prend en charge le premier mode d'appariement et/ou à un quatrième dispositif terminal qui prend en charge le deuxième mode d'appariement d'établir une connexion Bluetooth avec le dispositif audio.

4. Procédé selon l'une quelconque des revendications 1 à 3, comprenant en outre :
en réponse à une deuxième requête de connexion envoyée par le deuxième dispositif terminal, l'établissement (S503) d'une deuxième connexion Bluetooth avec le deuxième dispositif terminal ; et
la synchronisation (S504) d'informations d'état du dispositif audio avec le deuxième dispositif terminal par le biais de la deuxième connexion Bluetooth.

5. Procédé selon l'une quelconque des revendications 1 à 4, comprenant en outre :
en réponse à une deuxième requête de connexion envoyée par le deuxième dispositif terminal, l'établissement (S603) d'une deuxième connexion Bluetooth avec le deuxième dispositif terminal et l'arrêt de la diffusion des premières informations de configuration de connexion ; ou
en réponse à une deuxième requête de connexion envoyée par le deuxième dispositif terminal, l'établissement (S604) d'une deuxième connexion Bluetooth avec le deuxième dispositif terminal et la poursuite de la diffusion des premières informations de configuration de connexion et des deuxièmes informations de configuration de connexion tour à tour pour permettre à un troisième dispositif terminal qui prend en charge le premier mode d'appariement et/ou à un quatrième dispositif terminal qui prend en charge le deuxième mode d'appariement d'établir une connexion Bluetooth avec le dispositif audio.

6. Procédé selon l'une quelconque des revendications 1 à 5, comprenant en outre :
en réponse à la réception ni d'une première requête de connexion envoyée par le premier dispositif terminal ni d'une deuxième requête de connexion envoyée par le deuxième dispositif terminal pendant une période prédéterminée commençant à partir d'un moment auquel le dispositif audio commence à diffuser les premières informations de configuration de connexion et les deuxièmes informations de configuration de connexion, l'arrêt de la diffusion des premières informations de configuration de connexion ; ou
en réponse à la réception ni d'une première requête de connexion envoyée par le premier dispositif terminal ni d'une deuxième requête de connexion envoyée par le deuxième dispositif terminal pendant une période prédéterminée commençant à partir d'un moment auquel le dispositif audio commence à diffuser les premières informations de configuration de connexion et les deuxièmes informations de configuration de connexion, l'arrêt de la diffusion des premières informations de configuration de connexion et des deuxièmes informations de configuration de connexion.

7. Dispositif audio (700), comprenant :
une unité de diffusion (701), configurée pour diffuser des premières informations de configuration de connexion qui correspondent à un premier mode d'appariement et des deuxièmes informations de configuration de connexion qui correspondent à un deuxième mode d'appariement tour à tour en réponse au fait que le dispositif audio prend en charge le premier mode d'appariement et le deuxième mode d'appariement ;
dans lequel les premières informations de configuration de connexion sont configurées pour établir une connexion Bluetooth entre le dispositif audio et un premier dispositif terminal qui prend en charge le premier mode d'appariement, et les deuxièmes informations de configuration de connexion sont configurées pour établir une connexion Bluetooth entre le dispositif audio et un deuxième dispositif terminal qui prend en charge le deuxième mode d'appariement ;
**caractérisé en ce que** le premier mode d'appariement est un mode d'appariement rapide non-Google et le deuxième mode d'appariement est un mode d'appariement rapide Google.

8. Dispositif audio (700) selon la revendication 7, comprenant en outre :
une unité de connexion (703), configurée pour établir une première connexion Bluetooth avec un premier dispositif terminal en réponse à une première requête de connexion envoyée par le premier dispositif terminal ou établir une deuxième connexion Bluetooth avec le deuxième dispositif terminal en réponse à une deuxième requête de connexion envoyée par le deuxième dispositif terminal ; et
une unité de synchronisation (704), configurée pour synchroniser des informations d'état du dispositif audio avec le premier dispositif terminal par le biais de la première connexion Bluetooth ou synchroniser des informations d'état du dispositif audio avec le deuxième dispositif terminal par le biais de la deuxième connexion Bluetooth.

9. Dispositif audio (700) selon l'une quelconque des revendications 7 à 8, dans lequel le dispositif audio (700) diffuse en outre des informations d'état du dispositif audio simultanément sur une unité de temps pour la diffusion des premières informations de configuration de connexion et/ou une autre unité de temps pour la diffusion des deuxièmes informations de configuration de connexion.
